# FASCICULE DE BREVET EUROPEEN

(11) **EP 0 838 895 B1**
(45) Date de publication et mention de la délivrance du brevet: **24.09.2003**
(21) Numéro de dépôt: 97402497.8
(22) Date de dépôt: 22.10.1997
(51) Int. Cl.: H02P 8/20

(54) **Commande d'un moteur électrique pas à pas de véhicule automobile, notamment d'un moteur pas à pas pour la correction d'un projecteur**
Steuerung für einen Schrittmotor eines Fahrzeugs, insbesondere zur Lenkung eines Scheinwerfers
Vehicle stepper motor control, especially for steering a headlamp

(30) Priorité: 25.10.1996 FR 9613045
(43) Date de publication de la demande: 29.04.1998
(73) Titulaire: VALEO VISION, 93000 Bobigny (FR)
(72) Inventeur: Leleve, Joel, 93800 Epinay Sur Seine (FR)
(74) Mandataire: Le Forestier, Eric

(56) Documents cités:
- EP-A- 0 366 620
- EP-A- 0 422 529
- FR-A- 2 701 790
- US-A- 4 417 189

## Description

La présente invention est relative à la commande de moteurs électriques pas à pas pour véhicules automobiles.

L'invention trouve en particulier avantageusement application dans le cas de moteurs pas à pas pour la correction automatique de l'orientation de projecteurs de véhicules automobiles.

Dans le domaine de l'automobile, la fiabilité d'un système électrique est principalement fonction du nombre de fils et de connexions de ce système.

Généralement, chaque bobinage d'un stator de moteur électrique est relié à l'unité de commande du moteur par l'intermédiaire de deux fils d'alimentation. Cette unité de commande reçoit elle-même d'une unité de gestion - habituellement un calculateur - au moins deux signaux, l'un de synchronisation qui porte une information sur la fréquence de rotation à imposer au moteur, l'autre qui porte une information sur le sens de la rotation.

Pour limiter le nombre de fils entre les bobinages du moteur et le calculateur, il est connu d'intégrer l'unité de commande au stator du moteur. Le nombre de fils entre le calculateur et le moteur est alors ramené à deux, l'un qui véhicule le signal de synchronisation, l'autre qui véhicule le signal qui porte l'information de sens de rotation.

L'invention propose quant à elle une commande de moteur pas à pas qui permet de ne relier le calculateur et l'unité de commande que par un seul fil, qui porte à la fois les informations sur la vitesse et le sens de la rotation à imposer au moteur.

On comprend qu'une telle commande est particulièrement intéressante dans le cas de la correction automatique de l'orientation des projecteurs d'un véhicule, puisque dans ce cas le calculateur est relié à deux actionneurs (projecteurs droit et gauche).

Il est classiquement connu de commander des moteurs à courant continu par des tensions à impulsions à largeur modulée dont les valeurs moyennes - qui dépendent directement du rapport cyclique de ces tensions - imposent au moteur son sens et sa vitesse de rotation. On pourra à cet égard par exemple, se référer à EP 366 620 et EP 422 529.

Dans EP 422 529, il est proposé de commander un moteur électrique de type pas à pas par un signal à impulsions à largeur modulée dont la fréquence principale est constante. Le sens et la vitesse de rotation du moteur y sont tous deux fonctions du rapport cyclique du signal de commande à impulsion à largeur modulée. Toutefois, une telle commande oblige à disposer d'un module de synchronisation qui intègre un montage permettant de convertir le signal à impulsion à largeur modulée en entrée dudit module, en un signal d'horloge dont la période est fonction du rapport cyclique de ce signal d'entrée.

Il est connu de contrôler des moteurs pas à pas par des systèmes qui interprètent des créneaux de forme, de durée et d'amplitude particulières afin d'imposer sens et vitesse de rotation.

On pourra à cet égard se référer au dispositif décrit dans le document FR-A-2 701 790. Dans ce document, il est proposé de commander un moteur pas à pas par un signal de commande de rapport cyclique constant et pouvant être constant à un niveau bas, constant à un niveau haut, ou encore constitué par un signal rectangulaire de fréquence constante. L'information sur la vitesse de rotation est donnée par le nombre d'impulsions du signal rectangulaire, ce nombre d'impulsions fournissant le nombre de pas dont on avance le moteur. L'information sur le sens de rotation est quant à elle donnée par le niveau du signal continu qui précède les impulsions.

L'information sur la vitesse et le sens de rotation à commander est notamment portée par l'amplitude du signal de commande. La commande est ainsi sensible aux variations de niveaux de la source d'alimentation et de ce fait des erreurs sur la fréquence ou le sens de rotation à imposer peuvent être générées.

Un but de l'invention est de proposer un dispositif pour la commande d'un moteur pas à pas dans lequel la commande est insensible aux variations de niveaux des différentes sources d'alimentations et dans lequel les moyens de l'unité de commande qui génèrent le signal d'horloge à partir d'un signal à impulsion à largeur modulée sont d'une plus grande simplicité.

Un autre but de l'invention est de proposer un dispositif de ce type permettant une grande sensibilité de commande.

A cet effet, l'invention propose un dispositif pour la commande d'un moteur électrique pas à pas de véhicule automobile comportant une unité de commande qui est portée par le stator dudit moteur électrique et qui alimente le ou les bobinages dudit stator, ainsi qu'une unité de gestion qui est reliée à ladite unité de commande et qui transmet à celle-ci des informations sur la vitesse et le sens de la rotation à commander, l'unité de gestion et l'unité de commande n'étant reliées que par un seul fil , l'unité de gestion générant un signal à impulsions à largeur modulée qui porte à la fois les informations sur la vitesse et le sens de la rotation à commander, l'unité de commande comportant des moyens pour traiter le signal qu'elle reçoit et commander l'alimentation du moteur en fonction des informations de vitesse et de sens de rotation portées par ce signal, caractérisé en ce que l'information sur la vitesse de rotation du moteur est fournie aux moyens de traitement de l'unité de commande par la période du signal à impulsions à largeur modulée, lesdits moyens de traitement comportant des moyens pour générer à partir du signal reçu un signal d'horloge dont la fréquence dépend de la fréquence principale du signal reçu ainsi que des moyens pour commander le déplacement pas à pas du moteur de façon synchronisée sur ledit signal d'horloge.

Avantageusement, la fréquence du signal d'horloge est inférieure à ladite fréquence principale du signal reçu. Avec un tel signal d'horloge, des modifications dans la commande sont prises instantanément en compte, sans perte d'informations d'un pas à l'autre.

D'autres caractéristiques et avantages de l'invention ressortiront encore de la description qui suit. Elle doit être lue en regard des dessins annexés sur lesquels :
- la figure 1 est une représentation schématique illustrant un dispositif de commande conforme à un mode de réalisation possible de l'invention ;
- les figures 2a et 2b illustrent des signaux de commande conformes à un mode de mise en oeuvre possible de l'invention ;
- la figure 3 est une représentation d'un montage possible pour la partie formant récepteur du dispositif de commande de la figure 1.

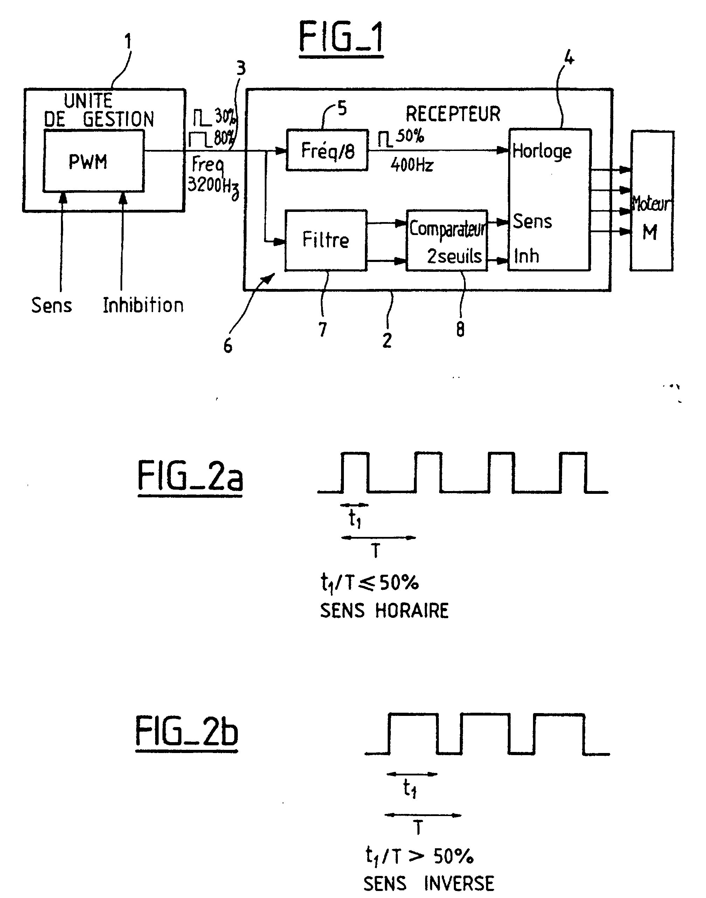

Le dispositif de commande illustré sur la figure 1 comporte une unité de gestion 1, qui génère un signal qui porte les informations de commande d'un moteur M pas à pas, ainsi qu'un ensemble récepteur 2 porté par le stator du moteur M et auquel le signal généré par l'unité 1 est transmis par l'intermédiaire d'une liaison 3 à un fil.

Le moteur M est par exemple un moteur pas à pas pour la correction automatique d'un projecteur de véhicule automobile.

L'unité de gestion 1 est un calculateur qui génère des signaux à impulsions à largeur modulée (PWM ou Pulse Width Modulation selon la terminologie anglo-saxonne généralement utilisée).

L'information sur la vitesse de rotation du moteur est fournie par la période T de ces signaux PWM, tandis que l'information sur le sens de la rotation est fournie par leur rapport cyclique.

Dans l'exemple illustré sur les figures 2a et 2b, la rotation du moteur est commandée dans un sens ou dans un autre selon que le rapport t₁/T est supérieur ou inférieur à 50 %, t₁ étant la largeur des impulsions de niveau haut.

L'ensemble récepteur 2 constitue l'unité de commande et comporte un circuit intégré 4 qui alimente le moteur en fonction des informations de fréquence et de sens portées par le signal transmis par le fil 3.

En amont de ce circuit 4, le récepteur 2 comporte d'une part des moyens 5 de remise en forme du signal reçu et d'autre part des moyens 6 pour la comparaison du rapport cyclique à un ou plusieurs seuils prédéterminés.

Les moyens de remise en forme 5 permettent de générer à partir du signal reçu un signal d'horloge sur lequel la rotation du moteur se synchronise.

Ce signal d'horloge est d'une fréquence inférieure à celle du signal issu du calculateur 1, par exemple une fréquence sous-multiple de celle du signal issu du calculateur 1.

Les moyens 5 sont à cet effet constitués par un montage diviseur de fréquence.

A titre d'exemple, la fréquence du signal émis par le calculateur 1 peut être de 3200 Hz, tandis que la fréquence du signal d'horloge sur lequel le déplacement pas à pas du moteur est synchronisé est de 400 Hz.

On notera qu'étant donné que le signal issu du générateur présente une fréquence supérieure à celle nécessaire à la commande du moteur, l'information de sens portée par ledit signal peut être traitée par les moyens 6 et le circuit 4 dans un temps court devant la période du signal du moteur, ce qui évite de perdre un ou plusieurs pas de rotation lorsque le calculateur 1 commande un changement de sens de rotation.

Les moyens 6 comportent un moyen de filtrage 7 permettant de générer à partir du signal reçu un signal correspondant de valeur moyenne. Ces moyens 6 comportent également des moyens 8 pour la comparaison du signal de valeur moyenne à une ou même plusieurs valeurs seuils.

Il peut en effet être prévu que le rapport cyclique du signal émis par le calculateur 1 puisse également, selon sa valeur, commander d'autres fonctions que le sens de rotation du moteur, telles que l'inhibition de l'alimentation du ou des bobinages.

Ainsi, en variante à la commande illustrée sur les figures 2a et 2b, le rapport cyclique t₁/T peut être comparé à deux seuils, par exemple l'un de 30 %, l'autre de 80 %.

Lorsque ce rapport cyclique t₁/T est inférieur à 30 %, le circuit intégré 4 alimente le moteur pour qu'il tourne dans un premier sens.

Lorsque t₁/T est compris entre 30 et 80 %, le circuit 4 commande le moteur pour qu'il tourne en sens inverse.

Lorsque enfin le rapport t₁/T est supérieur à 80-%, le circuit 4 commande l'inhibition de l'alimentation du moteur.

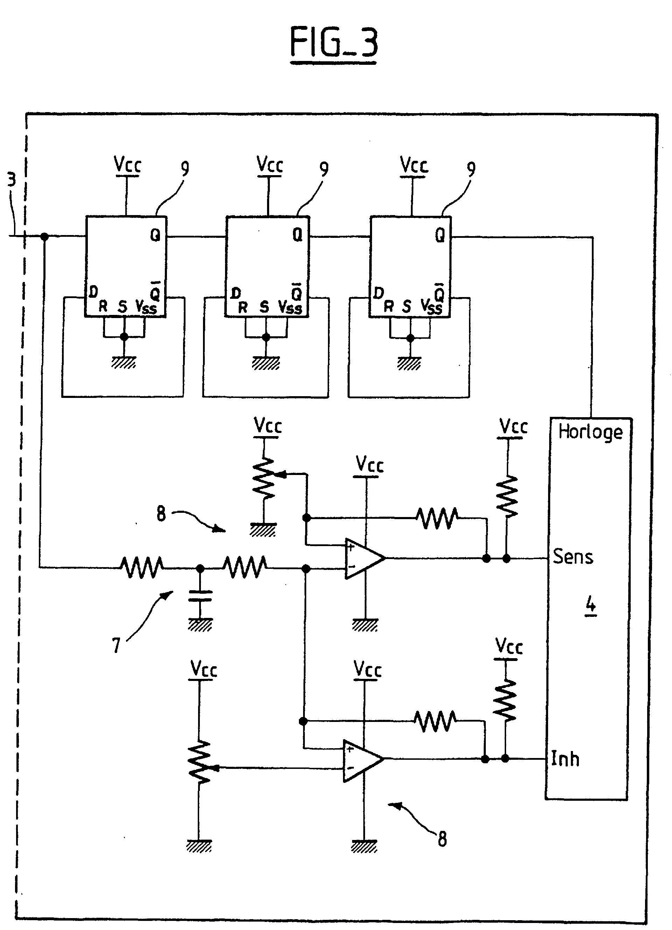

Un exemple détaillé de réalisation possible pour le récepteur 2 a été illustré sur la figure 3.

Les moyens de division de fréquence 5 y sont constitués par plusieurs bascules 9 montées en série et dont la sortie est envoyée sur une entrée horloge du circuit qui constitue l'unité de commande 4.

Les moyens de filtrage 7 sont quant à eux réalisés par un intégrateur de type RC.

Les moyens 8 sur lesquels la sortie de ces moyens de filtrage 7 est envoyée sont constitués quant à eux par des montages comparateurs de Schmidt.

Le circuit intégré 4, les bascules 9 et les montages comparateurs 8 utilisent comme tensions de référence et/ou d'alimentation une tension dérivée de la tension d'alimentation de la batterie.

On notera que dans le cas de la commande de l'orientation de projecteurs de véhicules automobiles, on dispose, avec l'alimentation des projecteurs, d'une source à proximité du moteur et de son récepteur 2.

La commande qui vient d'être décrite permet une fiabilité de câblage maximale, puisqu'elle ne nécessite qu'un seul fil de liaison entre l'unité de gestion 1 et le récepteur 2.

Egalement, elle permet un coût de liaison minimal, tout en permettant une gestion du signal de commande en temps réel.

En outre, cette commande est insensible aux variations de niveaux des différentes sources d'alimentation, puisque l'information est portée par la période et non par l'amplitude de la tension du signal de commande. De ce fait, les risques d'engendrer des erreurs sur la fréquence ou le sens de la rotation à commander sont minimisés.

## Revendications

1. Dispositif pour la commande d'un moteur électrique (M) pas à pas de véhicule automobile comportant une unité de commande (2) qui est portée par le stator dudit moteur électrique (M) et qui alimente le ou les bobinages dudit stator, ainsi qu'une unité de gestion (1) qui est reliée à ladite unité de commande (2) et qui transmet à celle-ci des informations sur la vitesse et le sens de la rotation à commander, l'unité de gestion (1) et l'unité de commande (2) n'étant reliées que par un seul fil (3), l'unité de gestion (1) générant un signal à impulsions à largeur modulée qui porte à la fois les informations sur la vitesse et le sens de la rotation à commander, l'unité de commande (2) comportant des moyens (4, 5, 6) pour traiter le signal qu'elle reçoit et commander l'alimentation du moteur (M) en fonction des informations de vitesse et de sens de rotation portées par ce signal, **caractérisé en ce que** l'information sur la vitesse de rotation du moteur est fournie aux moyens de traitement de l'unité de commande par la période du signal à impulsions à largeur modulée, lesdits moyens de traitement (4, 5, 6) comportant des moyens (5) pour générer à partir du signal reçu un signal d'horloge dont la fréquence dépend de la fréquence principale du signal reçu, ainsi que des moyens (4) pour commander le déplacement pas à pas du moteur (M) de façon synchronisée sur ledit signal d'horloge.

2. Dispositif selon la revendication 1, **caractérisé en ce que** la fréquence du signal d'horloge est inférieure à la fréquence principale du signal reçu.

3. Dispositif selon la revendication 2, **caractérisé en ce que** les moyens de génération d'un signal d'horloge comportent des moyens diviseurs de fréquence.

4. Dispositif selon l'une des revendications 1 à 3, **caractérisé en ce que** les moyens de traitement de l'unité de commande (2) comportent des moyens pour commander le sens de rotation dudit moteur en fonction du rapport cyclique dudit signal.

5. Dispositif selon la revendication 4, **caractérisé en ce que** les moyens de traitement de l'unité de commande comportent des moyens (6) pour la comparaison du rapport cyclique du signal à un ou plusieurs seuils prédéterminés.

6. Dispositif selon la revendication 5, **caractérisé en ce que** ces moyens de traitement comportent un premier et un deuxième moyens (8) pour la comparaison du rapport cyclique du signal à un seuil de changement de sens de la rotation du moteur et à un seuil d'inhibition de l'alimentation des bobinages du stator, l'unité de commande commandant le sens de rotation du moteur et/ou l'inhibition de l'alimentation de son ou ses bobinages en fonction des signaux en sortie de ces moyens de comparaison (8).

7. Dispositif selon l'une des revendications 5 ou 6, **caractérisé en ce que** les moyens de traitement comportent en amont des moyens de comparaison (8) des moyens de filtrage du signal reçu.

8. Dispositif pour la commande d'un moteur pas à pas de correction automatique de l'orientation d'un projecteur de véhicule automobile, **caractérisé en ce qu'**il est constitué par un dispositif selon l'une des revendications précédentes.

## Patentansprüche

1. Vorrichtung zur Steuerung eines elektrischen Schrittmotors (M) eines Kraftfahrzeugs mit einer durch den Stator des Elektromotors (M) getragenen Stelleinheit (2), die die Spule bzw. die Spulen des Stators mit Strom speist, sowie einer Steuereinheit (1), die mit der Stelleinheit (2) verbunden ist und an diese Informationen über die zu regelnde Drehgeschwindigkeit und Drehrichtung übermittelt, wobei die Steuereinheit (1) und die Stelleinheit (2) nur durch einen einzigen Draht (3) miteinander verbunden sind, wobei die Steuereinheit (1) ein Signal mit breitenmodulierten Impulsen erzeugt, das sowohl Informationen über die zu regelnde Drehgeschwindigkeit als auch die zu regelnde Drehrichtung transportiert, wobei die Stelleinheit (2) Mittel (4, 5, 6) zum Verarbeiten des von ihr empfangenen Signals und zur Steuerung der Speisung des Motors (M) in Abhängigkeit der von diesem Signal transportierten Informationen über die Drehgeschwindigkeit und die Drehrichtung umfasst,
**dadurch gekennzeichnet, dass** die Information über die Drehgeschwindigkeit des Motors an die Verarbeitungsmittel der Stelleinheit durch die Periode des Signals mit breitenmodulierten Impulsen geliefert wird, wobei die Verarbeitungsmittel (4, 5, 6) Mittel umfassen, die anhand des empfangenen Signals einen Taktimpuls erzeugen können, dessen Frequenz von der Hauptfrequenz des empfangenen Signals abhängt, sowie Mittel (4), um das schrittweise Verlagern des Motors (M) synchron mit dem Taktimpuls zu steuern.

2. Vorrichtung nach Anspruch 1,
**dadurch gekennzeichnet, dass** die Frequenz des Taktimpulses niedriger ist als die Hauptfrequenz des empfangenen Signals.

3. Vorrichtung nach Anspruch 2,
**dadurch gekennzeichnet, dass** die Mittel zum Erzeugen eines Taktimpulses Mittel zur Frequenzteilung umfassen.

4. Vorrichtung nach einem der Ansprüche 1 bis 3,
**dadurch gekennzeichnet, dass** die Verarbeitungsmittel der Stelleinheit (2) Mittel zur Steuerung der Drehrichtung des Motors in Abhängigkeit des zyklischen Verhältnisses des Signals umfassen.

5. Vorrichtung nach Anspruch 4,
**dadurch gekennzeichnet, dass** die Verarbeitungsmittel der Stelleinheit Mittel zum Vergleichen des zyklischen Verhältnisses des Signals mit einem oder mehreren vorbestimmten Grenzwerten umfasst.

6. Vorrichtung nach Anspruch 5,
**dadurch gekennzeichnet, dass** diese Verarbeitungsmittel ein erstes und ein zweites Mittel (8) zum Vergleichen des zyklischen Verhältnisses des Signals mit einem Grenzwert zum Ändern der Drehrichtung des Motors und mit einem Grenzwert zum Unterbinden der Speisung der Spulen des Stators umfasst, wobei die Stelleinheit die Drehrichtung des Motors und/oder die Unterbindung der Speisung seiner Spule bzw. seiner Spulen in Abhängigkeit der Signale am Ausgang dieser Vergleichsmittel (8) steuert.

7. Vorrichtung nach einem der Ansprüche 5 oder 6,
**dadurch gekennzeichnet, dass** die Verarbeitungsmittel vor den Vergleichsmitteln (8) Mittel zum Filtern des empfangenen Signals umfassen.

8. Vorrichtung zur Steuerung eines Schrittmotors zur automatischen Leuchtweiteregelung eines Kraftfahrzeugscheinwerfers,
**dadurch gekennzeichnet, dass** sie aus einer Vorrichtung gemäß einem der vorhergehenden Ansprüche gebildet ist.

## Claims

1. Apparatus for the control of an electric stepping motor (M) for a motor vehicle, comprising a control unit (2) which is carried by the stator of the said electric motor (M), and which feeds the winding or windings of the said stator, together with a management unit (1) which is connected to the said control unit (2) and which transmits to the latter information as to the speed and direction of rotation to be controlled, the management unit (1) and the control unit (2) being connected together only through a single wire (3), the management unit (1) generating a pulse width modulated signal which carries both the information as to speed and the information as to the direction of rotation to be controlled, the control unit (2) comprising means (4, 5, 6) for processing the signal which it receives and for controlling the power supply to the motor (M) as a function of the information about speed and direction of rotation carried by the said signal, **characterised in that** the information as to speed of rotation of the motor is supplied to the processing means of the control unit by the period of the pulse width modulated signal, the said processing means (4, 5, 6) including means for generating, from the signal received, a clock signal the frequency of which depends on the main frequency of the received signal, together with means (4) for controlling the step-by-step displacement of the motor (M) in synchronisation with the said clock signal.

2. Apparatus according to Claim 1, **characterised in that** the frequency of the clock signal is lower than the main frequency of the received signal.

3. Apparatus according to Claim 2, **characterised in that** the clock signal generating means comprise frequency divider means.

4. Apparatus according to one of Claims 1 to 3, **characterised in that** the processing means of the control unit (2) comprise means for controlling the direction of rotation of the said motor as a function of the cyclic ratio of the said signal.

5. Apparatus according to Claim 4, **characterised in that** the processing means of the control unit comprise means (6) for comparing the cyclic ratio of the signal with one or more predetermined threshold values.

6. Apparatus according to Claim 5, **characterised in that** the said processing means comprise a first and a second means (8) for comparing the cyclic ratio of the signal with a threshold value for changing the direction of rotation of the motor, and with a threshold value for inhibiting the power supply to the windings of the motor, the control unit controlling the direction of rotation of the motor and/or inhibition of the power supply of its winding or windings as a function of output signals from the said comparator means (8).

7. Apparatus according to Claim 5 or Claim 6, **characterised in that** the processing means comprise upstream comparator means (8) of the means for filtering the received signal.

8. Apparatus for controlling a stepping motor for automatic correction of the orientation of a motor vehicle headlight, **characterised in that** it consists of an apparatus according to one of the preceding Claims.
